# EUROPEAN PATENT APPLICATION

(11) **EP 4 672 489 A1**
(43) Date of publication of application: **31.12.2025**
(21) Application number: 24823519.4
(22) Date of filing: 07.03.2024
(51) Int. Cl.: H01M 50/591, H01M 50/588, H01M 50/503, H01M 10/42, H01M 50/502

(54) **BUSBAR ASSEMBLY AND BATTERY PACK INCLUDING SAME**

(30) Priority: 13.06.2023 KR 20230075855
(71) Applicant: LG Energy Solution, Ltd., Seoul 07335 (KR)
(72) Inventor: YUN, Sunwoo, Daejeon 34122 (KR)
(74) Representative: Plasseraud IP
(86) International application number: PCT/KR2024/002949
(87) International publication number: WO 2024/257997

(57) **Abstract**

A busbar assembly according to an exemplary embodiment of the present invention includes a busbar including a body portion extending in a first direction and end portions located at both ends of the body portion in the first direction and having through holes formed therein, and a protective cover including a cover portion surrounding the busbar, and a plurality of wing portions protruding from the cover portion in a second direction intersecting the first direction.

## Description

### [Technical Field]

### CROSS-REFERENCE TO RELATED APPLICATION

This application claims priority to and the benefit of Korean Patent Application No. 10-2023-0075855 filed in the Korean Intellectual Property Office on June 13, 2023, the entire contents of which are incorporated herein by reference.

The present invention relates to a busbar assembly and a battery pack including the same, and more specifically, to a busbar assembly that can provide improved fire resistance and prevent dust and the like from accumulating at a component coupling portion, and a battery pack including the same.

### [Background Art]

In modern society, as portable devices such as mobile phones, laptop computers, camcorders, and digital cameras have been used daily, the development of technologies in the fields related to mobile devices as described above has been actively pursued. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel, and therefore, there is an increasing need for development of the secondary battery.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses a lithium-based oxide and a carbonaceous material as a positive electrode active material and a negative electrode active material, respectively. The lithium secondary battery includes an electrode assembly in which a positive electrode plate and a negative electrode plate, each being coated with the positive electrode active material and the negative electrode active material, are arranged with a separator being interposed therebetween, and a battery case that seals and accommodates the electrode assembly together with an electrolyte solution.

Generally, the lithium secondary battery may be classified into a can-type secondary battery in which the electrode assembly is embedded in a metal can, and a pouch-type secondary battery in which the electrode assembly is embedded in a pouch of an aluminum laminate sheet, depending on a shape of the exterior material.

In the case of a secondary battery used for small-sized devices, two to three battery cells are arranged, but in the case of a secondary battery used for medium-sized and large-sized devices such as automobiles, a battery module in which a large number of battery cells are electrically connected is used. Such a battery module improves capacity and output by forming a battery cell stack where a large number of battery cells are connected to each other in series or parallel. Further, one or more battery modules can be mounted together with various control and protection systems such as a battery disconnect unit (BDU), a battery management system (BMS) and a cooling system to form a battery pack.

In a battery pack provided with a plurality of battery modules, the temperature may rise quickly and drastically due to buildup of heat emitted from the plurality of battery cells in a small space. In other words, in the case of battery modules in which a plurality of battery cells is stacked and a battery pack equipped with such battery modules, high output can be obtained, but there is a high possibility of continuous ignition or subsequent explosion if the heat dissipation of the battery cell is not properly performed or a thermal runaway phenomenon of the battery cells occurs.

Note that a busbar connected to the battery module is provided inside the battery pack.

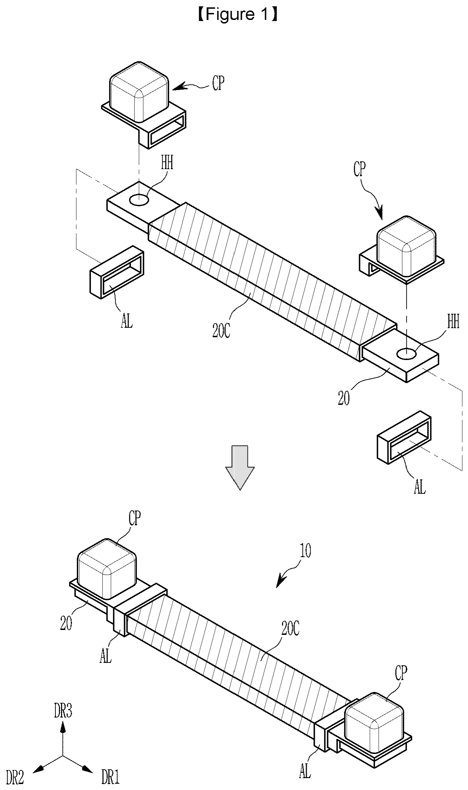

FIG. 1 is an exploded perspective view and a combined perspective view of a busbar assembly of the related art.

Referring to FIG. 1, a busbar assembly 10 of the related art includes a busbar 20, a sheath 20C surrounding the busbar 20, a cap CP, and a tape AL for fixing the cap CP. The busbar 20 is a bar-shaped metal member extending along a length direction. Through holes HH may be formed at both end portions of the busbar 20 for connection to a terminal busbar of a battery module. Such a busbar 20 is responsible for HV (High Voltage) connection in the battery pack. The HV connection refers to a connection that serves as a power source for supplying electric power, and the busbar 20 is a configuration that guides the electrical connection of the battery module, and generally includes a metal material with excellent electrical conductivity. As an example, the busbar 20 may include a copper (Cu) material.

The sheath 20C may surround the busbar 20. The sheath 20C may include an electrically insulating material, such as silicone or epoxy. Since the sheath 20C surrounds the busbar 20 through which high current flows, it prevents the busbar 20 from coming into contact with another electrical component or conductive member other than the terminal busbar of the battery module to cause a short circuit.

A fastening member is inserted into the through hole HH of the busbar 20, making it possible to connect the busbar 20 to the terminal busbar of the battery module. For insulation, the caps CP are attached to both ends of the busbar 20. The cap CP may be, for example, a rubber cap. The cap CP may be attached to the sheath 20C using the tape AL.

When a flame occurs inside the battery pack, the temperature of the flame is very high, around 1000°C, so the sheath 20C surrounding the busbar 20 may melt, or the cap CP and tape AL may melt, exposing the busbar 20. If the exposed busbar 20 comes into contact with another conductive member to cause a short circuit, the internal flame may spread further and may even spread to the outside of the battery pack. Ultimately, this could lead to an explosion of the battery pack or a vehicle equipped with the battery pack.

In addition, to prevent this, even if a configuration for protection is formed integrally with the busbar 20, the through hole HH of the busbar 20 needs to be exposed for electrical connection of the busbar 20. In this case, there is a problem that if dust and the like accumulate inside the through hole HH through the exposed portion, a short circuit may occur between components due to the accumulated dust.

Accordingly, there is a need to develop technology for a busbar assembly that can maintain electrical insulation even when a flame occurs inside a battery pack, and protect a component coupling portion from accumulation of dust and the like while simplifying a configuration.

### [Disclosure]

### [Technical Problem]

The present disclosure attempts to provide a busbar assembly that can maintain electrical insulation without melting even when a flame occurs inside a battery pack, and protect a component coupling portion from accumulation of dust and the like while simplifying a configuration, and a battery pack including the same.

However, the problems to be solved by exemplary embodiments of the present invention are not limited to the above-described problems, and can be variously expanded within the scope of the technical spirit included in the present invention.

### [Technical Solution]

A busbar assembly according to an exemplary embodiment of the present invention includes a busbar including a body portion extending in a first direction and end portions located at both ends of the body portion in the first direction and having through holes formed therein, and a protective cover including a cover portion surrounding the busbar, and a plurality of wing portions protruding from the cover portion in a second direction intersecting the first direction.

The cover portion may include a center portion surrounding an upper surface, a lower surface, and a side surface of the body portion of the busbar, and a peripheral portion surrounding upper surfaces and side surfaces of the end portions of the busbar and including coupling holes corresponding to the through holes.

The wing portions may include a first wing portion protruding from the peripheral portion, and a second wing portion protruding from the center portion.

The second wing portion may have a bent shape further extending in the first direction from an end portion protruding in the second direction.

The protective cover may include refractory silicone that is ceramified at high temperatures.

The protective cover may further include a protective layer covering an outer side of the refractory silicone.

The protective layer may be a glass fiber layer or a mica layer.

The protective cover can be covered on the busbar by insert injection molding of injecting the refractory silicone into a mold in which the busbar is inserted.

A battery pack according to an exemplary embodiment of the present invention includes the busbar assembly, a plurality of battery modules, a battery disconnect unit (BDU) module for controlling electrical connection of the battery modules, and a battery management system (BMS) module for monitoring and controlling operations of the battery modules, wherein at least one busbar assembly is responsible for at least one of the following electrical connections: between the battery modules, between the battery module and the BDU module, between the battery module and the BMS module, and between the BDU module and the BMS module.

The battery pack may further include a fastening member coupled to the through hole of the at least one busbar assembly.

The wing portions can cover the through hole and fastening member of the neighboring busbar assembly.

### [Advantageous Effects]

The busbar assembly of the present invention can maintain electrical insulation without melting even when a flame occurs inside a battery pack, and protect a component coupling portion from accumulation of dust and the like while simplifying a configuration.

The effects of the present invention are not limited to the above-described effects, and other effects not described will be apparently understood by one skilled in the art from the claims.

### [Description of the Drawings]

FIG. 1 is an exploded perspective view and a combined perspective view of a busbar assembly of the related art.
FIG. 2 is a plan view of a battery pack of an exemplary embodiment.
FIG. 3 is a perspective view of one of battery modules included in the battery pack of FIG. 2.
FIG. 4 is a partial perspective view showing the battery module of FIG. 3 with a module frame and an end plate removed.
FIG. 5 is an exploded perspective view of a busbar assembly of an exemplary embodiment.
FIG. 6 is a top view of the assembled busbar assembly of FIG. 5.
FIG. 7 is a cross-sectional view taken along line A-A' of FIG. 6.
FIG. 8 is a cross-sectional view taken along line B-B' of FIG. 6.
FIG. 9 is a cross-sectional view taken along line C-C' of FIG. 6.
FIG. 10 is a top view showing a state in which a busbar assembly of an exemplary embodiment is mounted on a battery pack.
FIG. 11 is a partial cross-sectional view taken along line D-D' of FIG. 10.

### [Mode for Invention]

In the following detailed description, only certain exemplary embodiments of the present invention have been shown and described, simply by way of illustration. The present invention can be variously implemented and is not limited to the following embodiments.

The drawings and description are to be regarded as illustrative in nature and not restrictive. Like reference numerals designate like elements throughout the specification.

In addition, the size and thickness of each configuration shown in the drawings are arbitrarily shown for understanding and ease of description, but the present invention is not limited thereto. In the drawings, the thickness of layers, films, panels, regions, etc., are exaggerated for clarity. In the drawings, for understanding and ease of description, the thickness of some layers and areas is exaggerated.

Further, it will be understood that when an element such as a layer, film, region, or substrate is referred to as being "on" another element, it can be directly on the other element or intervening elements may also be present. In contrast, when an element is referred to as being "directly on" another element, there are no intervening elements present. Further, when an element is referred to as being "above" or "on" a reference portion, the element is positioned above or below the reference portion, and it does not necessarily mean that the element is positioned "above" or "on" in a direction opposite to gravity.

In addition, unless explicitly described to the contrary, the word "comprise", and variations such as "comprises" or "comprising", will be understood to imply the inclusion of stated elements but not the exclusion of any other elements.

Further, in the entire specification, when it is referred to as "on a plane", it means when a target part is viewed from above, and when it is referred to as "on a cross-section", it means when the cross-section obtained by cutting a target part vertically is viewed from the side.

Additionally, in the entire specification, the first direction (X-axis direction), the second direction (Y-axis direction), and the third direction (Z-axis direction) are used as relative concepts. The first direction (X-axis direction), the second direction (Y-axis direction), and the third direction (Z-axis direction) can intersect perpendicularly with each other.

In the entire specification, the concepts of upper and lower are described as being distinguished along the third direction (Z-axis direction). Accordingly, "thickness" in the specification refers to a length measured in the third direction (Z-axis direction).

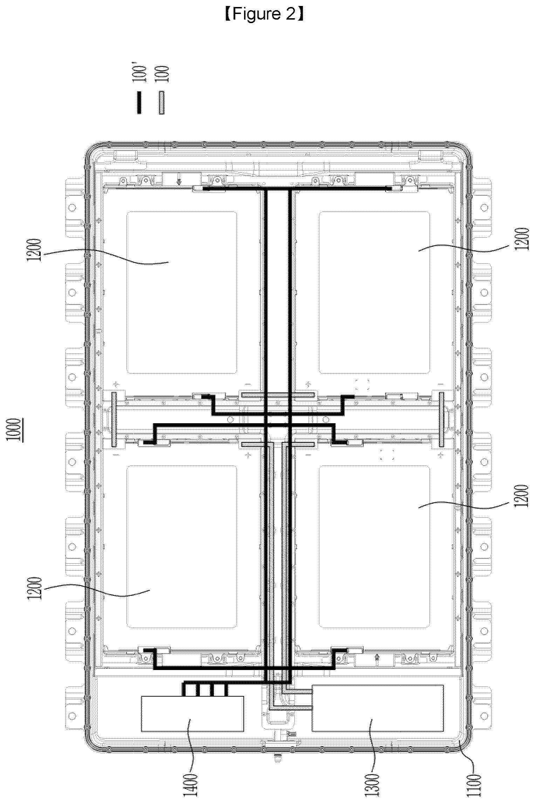

FIG. 2 is a plan view of a battery pack of an exemplary embodiment.

Referring to FIG. 2, a battery pack 1000 according to an exemplary embodiment includes a busbar assembly 100, a pack frame 1100, battery modules 1200, a battery disconnect unit (BDU) module 1300 for controlling electrical connection of the battery modules 1200, and a battery management system (BMS) module 1400 for monitoring and controlling operations of the battery modules 1200. At least one busbar assembly 100 according to the present exemplary embodiment is responsible for at least one of the following electrical connections: between the battery modules 1200, between the battery module 1200 and the BDU module 1300, between the battery module 1200 and the BMS module 1400, and between the BDU module 1300 and the BMS module 1400. Specifically, a plurality of battery modules 1200 may be housed in the pack frame 1100, and electrical connections between the battery modules 1200 or between the battery modules 1200 and the BDU module 1300 can be made by the busbar assembly 100. That is, the busbar assembly 100 according to the present exemplary embodiment can be responsible for HV (high voltage) connection. Here, the HV connection is a connection that serves as a power source for supplying electric power that requires high voltage, and refers to a connection between battery cells or between battery modules.

On the other hand, the BDU module 1300 is a member for controlling electrical connection of the battery modules 1200 and can cut off power between a power conversion device and the battery module 1200. The BDU module 1300 can secure the safety of the battery pack 1000 by cutting off the power of the battery pack 1000 when a condition in which current exceeds a set range occurs.

Note that an LV connection member 100' according to the present exemplary embodiment can be responsible for electrical connection between the battery module 1200 and the BMS module 1400. The electrical connection here is an LV (Low voltage) connection, which means a sensing connection for detecting and controlling a voltage and a temperature of the battery module 1200. Specifically, a sensor, and the like are arranged inside the battery module 1200, and real-time temperature information or voltage information on the battery module 1200 is transmitted to the BMS module 1400 via the LV connection member 100'. A real-time operating state of the battery module 1200 can be monitored and controlled through the BMS module 1400. Although not specifically shown, there is a case where an HV current sensor is integrated into the BMS module 1400. In this case, the busbar assembly according to the present exemplary embodiment can be responsible for electrical connection between the battery module 1200 and the BMS module 1400 or between the BDU module 1300 and the BMS module 1400.

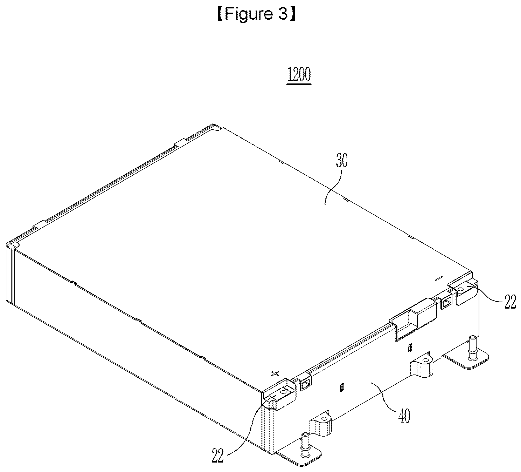

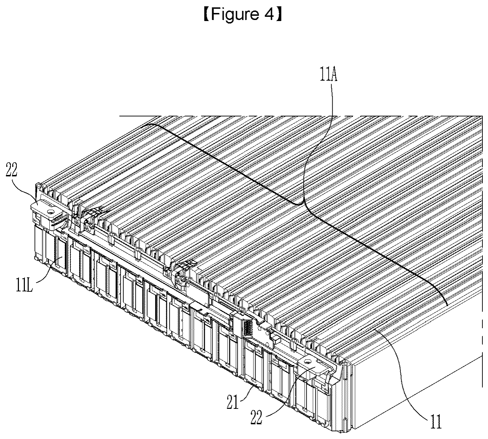

Hereinafter, the battery module 1200 according to the present exemplary embodiment will be described with reference to FIGS. 3 and 4. However, the battery module 1200 described below is an exemplary structure of a battery module including a plurality of battery cells 11, and various types of battery modules including a plurality of battery cells can be applied.

FIG. 3 is a perspective view showing one of battery modules included in the battery pack of FIG. 2.

FIG. 4 is a partial perspective view showing the battery module of FIG. 3 with a module frame and an end plate removed.

Referring to FIGS. 3 and 4, the battery module 1200 according to the present exemplary embodiment may include a battery cell stack 11A in which a plurality of battery cells 11 are stacked. The battery cell stack 11A is shown in FIG. 4. The battery cell stack 11A can be housed in a module frame 30 and an end plate 40.

For the battery cells 11 that constitute the battery cell laminate 11A, various types of battery cells can be applied. For example, the battery cell 11 may be a pouch-type battery cell. The pouch-type battery cell can be formed by housing an electrode assembly in a pouch case made of a laminate sheet including a resin layer and a metal layer, and then fusing an outer peripheral portion of the pouch case. Such a battery cell 11 may be formed into a rectangular sheet structure. However, the structure of the battery cell 11 is not limited thereto, and various types of battery cells can be applied.

An electrode lead 11L connected to the electrode assembly protrudes outside the case of the battery cell 11, and the electrode leads 11L of the respective battery cells 11 can be electrically connected to each other via a lead busbar 21. Note that at least one electrode lead 11L can be connected to a terminal busbar 22. As shown in FIG. 3, a part of the terminal busbar 22 may be exposed to the outside of the battery module 1200. Both the lead busbar 21 and the terminal busbar 22 may include a metal material with excellent electrical conductivity.

The busbar assembly 100 according to the present exemplary embodiment is electrically connected to the terminal busbar 22, so that the HV connection described above can be made. That is, the battery module 1200 can be electrically connected to another battery module 1200, BDU module 1300, or BMS module 1400 via the busbar assembly 100 connected to the terminal busbar 22.

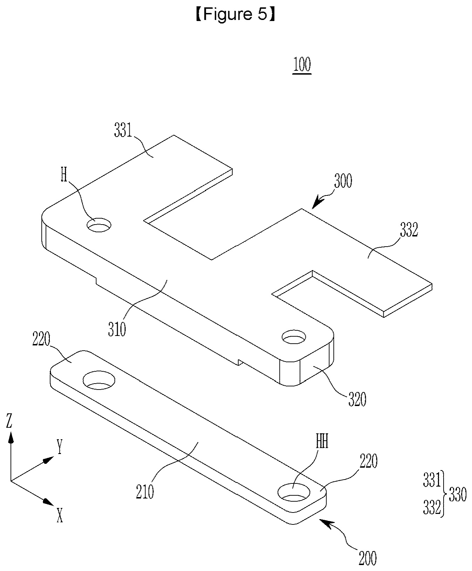

Below, the busbar assembly 100 according to an exemplary embodiment will be described with reference to FIGS. 5 to 9.

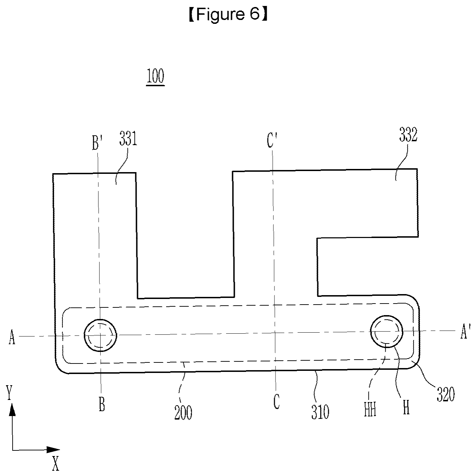

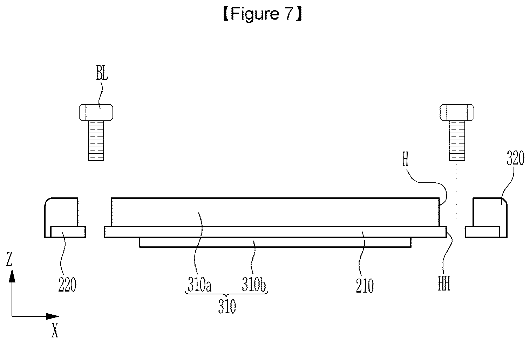

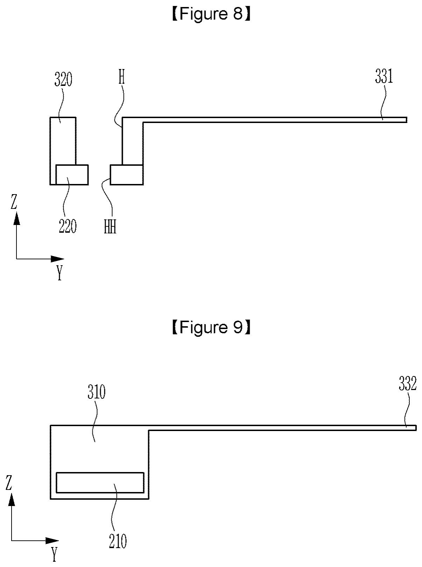

FIG. 5 is an exploded perspective view of a busbar assembly of an exemplary embodiment, FIG. 6 is a top view of the assembled busbar assembly of FIG. 5, FIG. 7 is a cross-sectional view taken along line A-A' of FIG. 6, FIG. 8 is a cross-sectional view taken along line B-B' of FIG. 6, and FIG. 9 is a cross-sectional view taken along line C-C' of FIG. 6.

Referring to FIG. 5, a busbar 200 guides electrical connection within the battery pack (1000, see FIG. 2). The busbar 200 is a configuration for guiding electrical connection, i.e., HV connection, of the battery module (1200, see FIG. 2), and may include a metal material with excellent electrical conductivity. As an example, the busbar 200 may include a copper (Cu) material. A body portion 210 of the busbar 200 may have a bar shape extending in one direction. In FIG. 5, as an example, the busbar 200 is shown as having a bar shape extending in the first direction (X-axis direction).

The busbar 200 of an exemplary embodiment includes a body portion 210 and end portions 220. The body portion 210 may correspond to a central portion of the busbar 200. The end portions 220 are located at both ends of the body portion 210. In the present specification, for convenience, the busbar 200 is described as including the body portion 210 and the end portions 220, but the body portion 210 and the end portions 220 have an integrated shape.

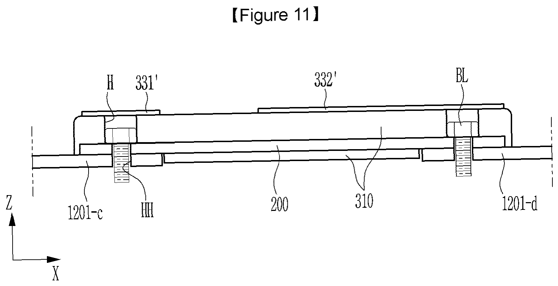

A through hole HH is formed in the end portion 220. A fastening member (BL, see FIGS. 7 and 11) is inserted into the through hole HH to connect the busbar 200 to an external electrical device. For example, a bolt may be inserted into the through hole HH of the end portion 220 to connect the busbar 200 and the terminal busbar (22, see FIG. 3) of the battery module (1200, see FIG. 3).

A protective cover 300 includes a cover portion surrounding the busbar 200, and a plurality of wing portions 330 protruding from the cover portion in the second direction (Y-axis direction) intersecting the first direction (X-axis direction). In this case, the cover portion includes a center portion 310 surrounding an upper surface, a lower surface, and a side surface of the body portion 210 of the busbar 200, and a peripheral portion 320 surrounding upper surfaces and side surfaces of the end portions 220 of the busbar 200. The center portion 310, the peripheral portion 320, and the wing portions 330 are integrally connected and formed.

As shown in FIG. 7, the center portion 310 may include a first portion 310a covering the upper surface of the body portion 210 of the busbar 200, a second portion 310b covering the lower surface of the body portion 210, and a side portion (not shown) connecting the first and second portions. In this case, the first portion 310a is shown as being thicker in FIG. 7, but no such limitation is not intended, and unlike the peripheral portion 320, the first portion 310a of the center portion 310 may be formed thinner. In this way, since the upper surface, lower surface, and side surface of the body portion 210 of the busbar 200 are surrounded by the center portion 310, the busbar 200 can be protected from contaminants (dirt, dust, and the like) or flames.

The peripheral portion 320 surrounds the upper surface and side surface of the end portion 220 of the busbar 200 and exposes a lower surface. In addition, the peripheral portion includes a coupling hole H at a position corresponding to the through hole HH of the busbar 220. The lower surface of the end portion 220 of the busbar 200 exposed by the peripheral portion 320 is arranged in contact with an object to be electrically connected, and in this state, the fastening member BL is inserted into the through hole HH to perform electrical connection. At this time, since the coupling hole H is also formed in the peripheral portion 320, there is no need to separately expose the through hole HH. That is, by inserting the fastening member BL into the coupling hole H and advancing the fastening member BL along the coupling hole H, the fastening member BL can be installed in the through hole HH. At this time, the fastening member BL can penetrate the through hole HH, protrude from a back surface of the busbar 200, and connect to an electrical connection portion of another electrical device. In this way, the busbar 200 and another electrical connection portion can be easily connected by the coupling hole H formed in the peripheral portion 320 formed integrally with the center portion 310. In addition, since there is no need to perform additional deformation (e.g., folding, or the like) of the protective cover 300 for exposing the through hole HH during the connecting process, damage to the busbar assembly 100 can be minimized and structural rigidity can be improved.

However, even after the fastening member BL is fastened at this time, if an upper portion of the coupling hole H is exposed, there is a problem that contaminants such as dirt and dust may enter and accumulate inside the coupling hole H. Especially, if such contaminants accumulate, a short circuit may occur between the busbar 200 and the fastening member BL or another electrical connection portion at the electrically connected portion. To prevent this, in the present embodiment, a configuration is adopted in which the upper portion of the coupling hole H where the coupling has been completed is covered by a wing portion 330 protruding from a neighboring busbar assembly 100, as described below.

Referring primarily to FIGS. 8 and 9 along with FIGS. 5 and 6, the plurality of wing portions 330 may be formed to protrude in the second direction from the cover portion surrounding the busbar 200, i.e., the center portion 310 and the peripheral portion 320. That is, the center portion 310 and the peripheral portion 320 are formed corresponding to the portion where the busbar 200 is formed, and as described later, the wing portion 330 is configured to cover the neighboring busbar assembly 100, and is formed to protrude outward from a region where the busbar 200 is arranged toward the second direction (Y-axis direction) intersecting the first direction (X-axis direction) that is the extension direction of the busbar 200. In the present exemplary embodiment, the wing portion 330 is described as protruding in the second direction (Y-axis direction). However, no such limitation is intended, and the formation position of the wing portion 330 can be appropriately determined depending on the direction that the wing portion 330 is intended to cover and protect.

Since the wing portion 330 is configured to cover the coupling hole H of the neighboring busbar assembly 100, the wing portion is formed to protrude from the upper portion of the cover portion in the thickness direction so as to cover the upper portion of the coupling hole H. Additionally, a thickness of the wing portion only needs to be sufficient to cover the coupling hole H to prevent the accumulation of contaminants, so the wing portion can be formed with a thinner thickness compared to the cover portion.

The number of wing portions 330 can be determined depending on the number of coupling holes H to be covered. However, since the busbar 200 generally has two through holes HH located at both ends, two wing portions 330 may be included as shown in the drawings of the present exemplary embodiment. In this case, the first wing portion 331 may protrude in a straight-line shape along the second direction (Y-axis direction) from the peripheral portion 320, and the second wing portion 332 may protrude in the second direction (Y-axis direction) from the center portion 310 and then protrude in a shape bent along the first direction (X-axis direction) at an end portion protruding in the second direction. The reason for this configuration is that, as described below, the coupling hole H of the adjacent busbar assembly 100 should be covered by the wing portion 330 provided in each of the two neighboring busbar assemblies 100. If the wing portions 330 are uniformly configured to protrude only at the portions where the coupling holes H are formed, the wing portions may interfere with each other during assembling, leading to reduction in assemblability. In addition, by configuring the first and second wing portions 331 and 332 to protrude from different positions and the second wing portion 332 to have a bent shape, a gap between the neighboring busbar assemblies 100 is also covered by the wing portions 330, thereby preventing the accumulation of contaminants and the occurrence of short circuits in the corresponding portion (such as the portion where the case of the battery module is placed).

The center portion 310, peripheral portion 320, and wing portion 330 of the protective cover 300 may be formed integrally and may include refractory silicone to improve fire resistance. For example, the protective cover 300 may be formed by insert injection molding of injecting the refractory silicone into a mold in which the busbar 200 is inserted. The refractory silicone can be ceramified at high temperatures, unlike common silicone materials that burn when exposed to flame or at high temperatures. Therefore, the refractory silicone, when exposed to flame, can be ceramified without burning and can maintain insulation for the busbar 200. For example, the refractory silicone can be ceramified at temperatures from 500 degrees Celsius to 1700 degrees Celsius. However, the temperature range at which the refractory silicone is ceramified is not limited thereto.

The refractory silicone may include silicone polymer and silica. For example, the applied silicone polymer may be a polysiloxane-based compound having a vinyl group as a functional group, and may serve as a base material for the refractory silicone material. For example, the applied silica may be fumed silica serving as a reinforcing filler included in the silicone polymer. Fumed silica may be obtained by preparing a high-purity silicon chloride (SiCl₄) compound through a reaction with hydrochloric acid using metallic silicon as a main raw material and a purification process, and then reacting the compound with hydrogen and oxygen in a high-temperature flame. Additionally, the refractory silicone may contain platinum (Pt) as a catalyst.

When the refractory silicone is exposed to flame or high temperatures, silicone polymer is decomposed and silica (SiO₂) is cross-linked, leading to formation of a ceramic material. The protective cover 300 of an exemplary embodiment including refractory silicone can be ceramified rather than burning or melting even when exposed to flame or placed in a high-temperature environment and can maintain electrical insulation.

Therefore, the protective cover 300 can insulate the body portion 210 of the busbar 200 even in flames or at high temperatures, thereby preventing the busbar 200 from coming into contact with other electrical components or conductive members to cause a short circuit.

Note that a protective layer (not shown) may be additionally formed on an outer side of the protective cover 300. For example, a protective layer may be formed by winding a tape such as a glass fiber tape or a mica tape on the protective cover 300 made of refractory silicone. Alternatively, a protective layer may be formed by attaching a planar glass fiber or mica, or by coating, applying, spraying, or other known methods. By providing such an additional protective layer, the fire resistance, the insulation, and the heat resistance can be further improved.

As such, according to the busbar assembly 100 according to an exemplary embodiment of the present invention, since the peripheral portion 320 in which the coupling holes H for coupling the fastening members BL are formed is integrally formed with the protective cover 300 for insulating the busbar 200, it is possible to ensure the excellent fire resistance and insulation as well as easy assemblability. In addition, a problem that may occur at this time, that is, a problem in that contaminants may penetrate into the coupling holes H and cause a short circuit, can also be solved by covering the coupling holes H of the neighboring busbar assembly 100 with the wing portion 330 integrally formed with the protective cover 300.

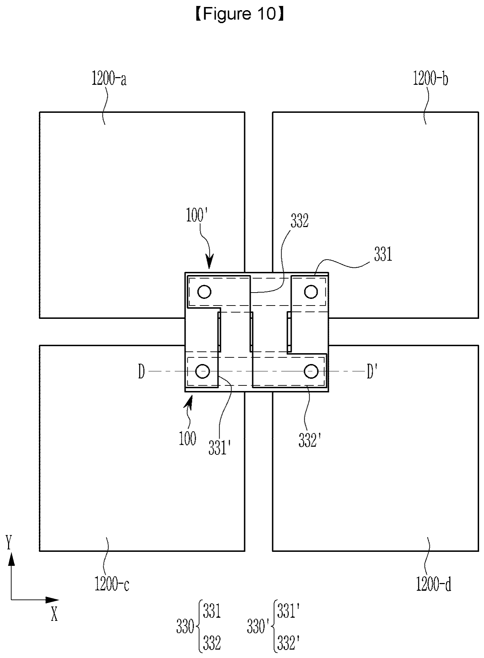

Below, this effect, that is, the configuration for preventing accumulation of contaminants within the coupling holes H by the wing portion 330 will be described in more detail with reference to FIGS. 10 and 11.

FIG. 10 is a top view showing a state in which a busbar assembly of an exemplary embodiment is mounted on a battery pack, and FIG. 11 is a partial cross-sectional view taken along line D-D' of FIG. 10.

In FIG. 10, the first to fourth battery modules 1200-a, 1200-b, 1200-c, and 1200-d, the first busbar assembly 100, and the second busbar assembly 100' are shown. The first and second battery modules 1200-a and 1200-b are electrically connected by the second busbar assembly 100', and the third and fourth battery modules 1200-c and 1200-d are electrically connected by the first busbar assembly 100. That is, the battery modules 1200 aligned in the first direction (X-axis direction) are electrically connected to each other by the busbar assembly (100, 100'), and in this state, in the battery modules 1200 aligned in the second direction (Y-axis direction), the through holes H into which the fastening members BL are inserted are covered by the wing portions 330 and 330' of the busbar assemblies.

Referring to Fig. 11, which shows a cross-section based on the first busbar assembly 100, the first busbar assembly 100 is configured to electrically connect the third and fourth battery modules 1200-c and 1200-d. That is, the fastening member BL passing through the coupling hole H and the through hole HH located at one end of the first busbar assembly 100 passes through a hole formed in a terminal busbar 1201-c of the third battery module 1200-c, and the fastening member BL passing through the coupling hole H and the through hole HH located at the other end passes through a hole formed in a terminal busbar 1201-d of the fourth battery module 1200-d, thereby electrically connecting the third and fourth battery modules 1200-c and 1200-d. At this time, each fastening member BL is fastened while the upper portion of the coupling hole H is exposed, and after the fastening is completed, the upper portion of the coupling hole H is covered by the wing portion 330' protruding from the neighboring second busbar assembly 100' in the Y-axis direction, so that the inside of the hole where the fastening member BL is located can be blocked. Although a cross-section is not shown, the coupling hole H of the second busbar assembly 100' can also be covered by the wing portion 330 protruding from the first busbar assembly 100 in the same manner.

According to such a configuration, the fastening members BL can be easily coupled while the wing portions 330 and 330' do not cover the same, and after the coupling is completed, the coupling holes H and the components inside the coupling holes can be blocked and protected by the wing portions 330 and 330', so that it is possible to prevent contaminants (dirt, dust, etc.) from accumulating at the portion where the electrical connection is made to cause a short circuit between the electrically connected components. Note that in the present exemplary embodiment, an example where the busbar assembly 100 is applied to a coupling portion between multiple battery modules 1200 has been described. However, no such limitation is intended, and the present exemplary embodiment can be applied to various portions that can be electrically connected by the busbar assembly 100.

In the present exemplary embodiment, terms indicating directions such as front, rear, left, right, up, and down are used, but these terms are used only for convenience of description and may vary depending on the location of the target object or the location of the observer.

One or more battery modules according to the above-described exemplary embodiment can be mounted together with various control and protection systems such as a battery management system (BMS), a battery disconnect unit (BDU), and a cooling system to form a battery pack.

The battery module or battery pack described above can be applied to various devices. Specifically, the battery module or battery pack described above can be applied to vehicle means such as an electric bike, an electric vehicle, and a hybrid electric vehicle, or an energy storage system (ESS), but is not limited thereto and can also be applied to various devices that can use a secondary battery.

Although the preferred exemplary embodiments of the present invention have been described in detail, the scope of the present invention is not limited thereto, and various modifications and improvements made by one skilled in the art by using the basic concept of the present invention defined in the following claims also fall within the scope of the present invention.

### [Reference signs list]

100: busbar assembly
200: busbar
210: body portion
220: end portion
HH: through hole
300: protective cover
310: center portion
320: peripheral portion
H: coupling hole
330: wing portion
331: first wing portion
332: second wing portion
1000: battery pack
1100: pack frame
1200: battery module
1300: BDU module
1400: BMS module

## Claims

1. A busbar assembly comprising:
a busbar comprising a body portion extending in a first direction and end portions located at both ends of the body portion in the first direction and having through holes formed therein; and
a protective cover comprising a cover portion surrounding the busbar, and a plurality of wing portions protruding from the cover portion in a second direction intersecting the first direction.

2. The busbar assembly of claim 1, wherein:
the cover portion comprises:
a center portion surrounding an upper surface, a lower surface, and a side surface of the body portion of the busbar, and
a peripheral portion surrounding upper surfaces and side surfaces of the end portions of the busbar and comprising coupling holes corresponding to the through holes.

3. The busbar assembly of claim 2, wherein:
the wing portions comprise
a first wing portion protruding from the peripheral portion, and a second wing portion protruding from the center portion.

4. The busbar assembly of claim 3, wherein:
the second wing portion has a bent shape further extending in the first direction from an end portion protruding in the second direction.

5. The busbar assembly of claim 1, wherein:
the protective cover comprises refractory silicone that is ceramified at high temperatures.

6. The busbar assembly of claim 5, wherein:
the protective cover further comprises a protective layer covering an outer side of the refractory silicone.

7. The busbar assembly of claim 6, wherein:
the protective layer is a glass fiber layer or a mica layer.

8. The busbar assembly of claim 5, wherein:
the protective cover is covered on the busbar by insert injection molding of injecting the refractory silicone into a mold in which the busbar is inserted.

9. A battery pack comprising:
the busbar assembly of any one of claims 1 to 8;
a plurality of battery modules;
a battery disconnect unit BDU module for controlling electrical connection of the battery modules; and
a battery management system BMS module for monitoring and controlling operations of the battery modules,
wherein at least one busbar assembly is responsible for at least one of the following electrical connections: between the battery modules, between the battery module and the BDU module, between the battery module and the BMS module, and between the BDU module and the BMS module.

10. The battery pack of claim 9, further comprising
a fastening member coupled to the through hole of the at least one busbar assembly.

11. The battery pack of claim 10, wherein:
the wing portions cover the through hole, into which the fastening member is inserted , of the neighboring busbar assembly.
